# EUROPÄISCHE PATENTANMELDUNG

(11) **EP 3 702 298 A1**
(43) Veröffentlichungstag der Anmeldung: **02.09.2020**
(21) Anmeldenummer: 19160367.9
(22) Anmeldetag: 01.03.2019
(51) Int. Cl.: B65D 85/804

(54) **KAPSEL UND SYSTEM FÜR DIE ZUBEREITUNG EINES FLÜSSIGEN LEBENSMITTELS**

(71) Anmelder: Delica AG, 4127 Birsfelden (CH)
(72) Erfinder: KURTZ, Olivia, 8057 Zürich (CH); GUGERLI, Raphael, 6903 Aesch (CH); AFFOLTER, Roland, 5103 Möriken (CH); WÜTHRICH, Martin, 4417 Ziefen (CH); BRUNSCHWILER, Christoph, 5400 Baden (CH)
(74) Vertreter: Hepp Wenger Ryffel AG

(57) **Zusammenfassung**

System umfassend eine Kapsel (1) und eine Kapselaufnahme (31) einer Zubereitungsmaschine (30), wobei eine Dichtlippe (10) mit einer Nut (33) der Kapselaufnahme (31) derart korrespondiert, dass die Dichtlippe (10) in der Nut (33) aufgenommen wird und mit einer Kontaktfläche (32) der Kapselaufnahme (31) eine dichte Verbindung ermöglicht.

## Beschreibung

Die vorliegende Erfindung betrifft eine Kapsel und ein System für die Zubereitung eines flüssigen Lebensmittels. Üblicherweise wird für die Zubereitung eines flüssigen Lebensmittels die Kapsel in eine Brühkammer der Zubereitungsmaschine eingeschlossen, wobei sich eine Kapselaufnahme relativ zu einer Verschlussplatte der Maschine bewegt und mit dem Flansch der Kapsel eine dichte Verbindung eingeht. Die Kapselaufnahme kann dabei auf ihrer dem Flansch der Kapsel zugewandten Seite mit Rinnen oder Riefen versehen sein, welche sich im Laufe der Benutzung durch Abnutzung ergeben oder vom Maschinenhersteller bewusst vorgesehen sind. Aus dem Stand der Technik sind bereits verschiedene Kapseln und Systeme bekannt.

Beispielsweise offenbaren die EP 1 654 966 A1, EP 1 849 715 A1 und EP 2 151 313 A1 eine Kapsel aus Aluminium mit einem Flansch, wobei auf dem Flansch ein Dichtungselement aus einem anderem Material angeordnet ist. Nachteilig an diesen Kapseln ist, dass das zusätzliche Material in der Produktion einen weiteren Prozessschritt bedingt und somit die Kapsel verteuert. Ausserdem wird das Recycling der Kapseln erheblich erschwert.

Die WO 2014/184652 A1 und WO 2014/184651 A1 beschreiben eine Kapsel, welche sich unter der Einwirkung des umschliessenden Elementes stark deformiert und deren Bereich des Flansches gar um eine vordere Kante eines umschliessenden Elementes der Brühkammer gezogen wird. Diese Deformation bedingt hohe Kräfte, um eine erfolgreiche Dichtung zu erzeugen.

Die WO 2016/041596 A1 offenbart eine weitere Kapsel, welche auf ihrem Flansch eine Dichtlippe aufweist, wobei die Dichtlippe sich den Konturen des umschliessenden Elementes anpassen soll. Trotz Deformation der Dichtlippe kann keine zuverlässige Abdichtung erfolgen.

Es ist Aufgabe der Erfindung, die Nachteile des Standes der Technik zu überwinden. Insbesondere soll eine Kapsel und ein System zur Verfügung gestellt werden, welches eine einfache und zuverlässige Abdichtung zwischen Kapsel und Kapselaufnahme der Maschine erlaubt. Ausserdem soll die Kapsel einfach und kostengünstig herstellbar und das Material der Kapsel durch Recycling wiederverwertbar sein.

Diese Aufgabe wird durch die in den unabhängigen Patentansprüchen definierten Vorrichtungen gelöst. Weitere Ausführungsformen ergeben sich aus den abhängigen Patentansprüchen.

Eine erfindungsgemässe Kapsel für die Zubereitung eines flüssigen Lebensmittels umfasst einen Kapselkörper mit einer Seitenwand und mit einem Boden, sowie einen den Kapselkörper abschliessenden Deckel. Der Kapselkörper ist vorzugsweise rotationssymmetrisch und/oder kegelstumpfförmigen ausgebildet. Die Seitenwand und der Boden können einstückig ausgebildet sein. Der Kapselkörper und der Deckel bilden einen Aufnahmeraum zur Aufnahme mindestens einer Substanz zur Zubereitung des flüssigen Lebensmittels. Der Kapselkörper weist einen umlaufenden flanschförmigen Rand auf mit einer Siegelfläche zum dichten Verbinden des Deckels mit dem Kapselkörper. Auf einer der Siegelfläche gegenüberliegenden Basis des umlaufenden Randes ist eine umlaufende abstehenden Dichtlippe zum dichten Zusammenwirken mit einer Kontaktfläche einer Kapselaufnahme einer Zubereitungsmaschine angeordnet. Die Dichtlippe ist hohl und weist zwei Schenkel auf, welche mit der Siegelfläche des flanschförmigen Randes im Wesentlichen einen rechten Winkel ausbilden. Die Dichtlippe weist wenigstens eine Höhe von 1.0 mm gemessen ab der Siegelfläche des flanschförmigen Randes auf. Vorteilhaft beträgt die Höhe zwischen 1.1 mm und 1.8 mm, bevorzugt zwischen 1.2 mm und 1.6 mm, besonders bevorzugt zwischen 1.3 mm und 1.4 mm. Zur Sicherstellung der Abdichtung zwischen Kapsel und umschliessendem Element der Maschine ist wenigstens eines der nachfolgenden Merkmale erforderlich:
- die Dichtlippe ist derart geformt und dimensioniert, dass diese wenigstens eine Kraft von 500 N, bevorzugt wenigstens 650 N, besonders bevorzugt wenigstens 800 N, im Wesentlichen ohne eine plastische Verformung aufnehmen kann, und/oder
- die Dichtlippe weist eine Breite zwischen 0.4 mm und 0.9 mm, bevorzugt zwischen 0.5 mm und 0.8 mm, besonders bevorzugt zwischen 0.6 mm und 0.7 mm, auf, und/oder
- die Dichtlippe ist in einem radialen Abstand zwischen 15.8 mm und 16.3 mm, bevorzugt zwischen 15.9 mm und 16.2 mm, besonders bevorzugt zwischen 16.00 mm und 16.15 mm, von einer zentralen Achse des Kapselkörpers angeordnet.

Hier und im Folgenden gelten die folgenden Definitionen:
Unter einer Kontaktfläche einer Kapselaufnahme wird derjenige Bereich der Kapselaufnahme einer Maschine verstanden, welcher mit einem Gegenstück der Maschine die Kapsel, insbesondere den flanschartigen Rand der Kapsel, einklemmt und durch diese Klemmwirkung eine dichte Verbindung zwischen der Kapsel und der Kapselaufnahme erzeugt. Es handelt sich somit um einen in Schliessrichtung vorderen Bereich der Kapselaufnahme. Bei heute erhältlichen Maschinen ist diese Kontaktfläche teilweise mit radial verlaufenden Rillen oder Riefen versehen und kann auch eine umlaufende Nut aufweisen.

Unter einem im Wesentlichen rechten Winkel wird ein Winkel im Bereich von 90° ± 10°, bevorzugt ± 8°, besonders bevorzugt ± 7° verstanden.

Die Kraft, welche auf die Dichtlippe auftrifft, wird in Achsrichtung der Kapsel und senkrecht auf eine höchste Kante der Dichtlippe angelegt. Das Werkzeug zum Messen der Kraft soll dabei eine ebene Fläche aufweisen, welche senkrecht zur Achsrichtung der Kapsel verläuft.

Unter im Wesentlichen ohne eine plastische Verformung wird verstanden, dass unter der Einwirkung der Kraft, wie oben definiert, eine elastische Verformung der Dichtlippe zwar zulässig ist, diese sich nach Wegfall der Kraft jedoch wieder in ihre Ausgangsform zurückstellt. Zur Überprüfung dieses Merkmals kann ein Kraft-Weg-Diagramm die Belastung der Dichtlippe senkrecht auf ihren höchsten Punkt aufgezeichnet werden. Kennzeichnend für eine solche elastische Verformung ist, wenn die Kennlinie bei einer Kraft zwischen 100 N und 500 N, bevorzugt zwischen 100 N und 650 N, besonders bevorzugt zwischen 100 N und 800 N, linear verläuft. Nach Wegfall der Kraft und erneutem bestimmen des Kraft-Weg-Diagramms deckt sich die neue Kennlinie mit der vorgängig aufgezeichneten Kennlinie im angegebenen Kraftbereich.

Die Breite der Dichtlippe wird auf halber Höhe zwischen dem höchsten Punkt bzw. der höchsten Kante der Dichtlippe und der Siegelfläche gemessen.

Der radiale Abstand der Dichtlippe zur zentralen Achse der Kapsel bezieht sich auf den Abstand der höchsten Kante der Dichtlippe zur zentralen Achse.

Durch die Ausbildung der Dichtlippe auf dem flanschartigen Rand der Kapsel kann eine einfache und kostengünstige Dichtung erstellt werden. Es sind keine zusätzlichen Elemente nötig.

Die Ausgestaltung der Dichtlippe als hohle Dichtlippe erlaubt beispielsweise eine einstückige Ausgestaltung des flanschförmigen Randes, beispielsweise durch Tiefziehen eines metallischen Materials. Entsprechend kann die Kapsel kostengünstig hergestellt werden.

Die Ausrichtung der Schenkel der Dichtlippe im Wesentlichen in einem rechten Winkel zur Siegelfläche erhöht die Stabilität der Dichtlippe, so dass diese bei Beaufschlagung mit einer Anpresskraft der Kontaktfläche der Kapselaufnahme nicht gestaucht wird oder wegkippt.

Mit der angegebenen Höhe der Dichtlippe wird eine Initialdichtung durch das mechanische Verschliessen der Brühkammer ermöglicht, welche ausreichend für den Beginn einer Extraktion ist. Es hat sich in Versuchen gezeigt, dass eine geringere Höhe den Anforderungen nicht genügt und eine höhere Leckage bewirkt.

Durch die hohe Kraft, welche von der Dichtlippe aufgenommen werden kann, wird sichergestellt, dass die Dichtlippe nicht unnötig deformiert wird und sich keine Falten durch die Deformation bilden, welche eine Leckage begünstigen würden.

Die gewählte Breite der Dichtlippe ist vorteilhaft, weil sich durch diese Breite eine stabile Konstruktion im Bereich der höchsten Kante durch einen Krümmungsradius einfach realisieren lässt. Ausserdem ist diese Breite vorteilhaft bei Maschinen mit einer Kapselaufnahme, welche eine umlaufende Nut aufweist. Die Dichtlippe kann in diese Nut eingreifen und sich beidseitig in der Nut abstützen. Entsprechend werden zwei umlaufende Kontaktlinien gebildet, welche die Dichtwirkung optimieren.

Der radiale Abstand der Dichtlippe ist so gewählt, dass diese auf die Kontaktfläche der Kapselaufnahme trifft. Insbesondere bei Maschinen mit einer Kapselaufnahme, welche eine umlaufende Nut aufweist, ist der radiale Abstand so gewählt, dass er einem Radius der umlaufenden Nut in etwa entspricht. Somit trifft die Dichtlippe mindestens teilweise in die Nut und optimiert durch zwei umlaufende Kontaktlinien die Dichtwirkung.

Der Kapselkörper, der flanschförmige Rand und die Dichtlippe können einstückig ausgestaltet sein. Entsprechend wird eine kostengünstige Herstellung der Kapsel ermöglicht. Beispielsweise kann die Kapsel durch Sintern, Spritzgiessen, Pressen oder Umformen, insbesondere durch Tiefziehen, Thermoformen, Innen- oder Aussenhochdruckumformen hergestellt werden.

Die Dichtlippe kann in einem radialen Abstand zwischen 0.4 mm und 0.9 mm, bevorzugt zwischen 0.5 mm und 0.75 mm, besonders bevorzugt zwischen 0.55 mm und 0.65 mm, von der Seitenwand des Kapselkörpers angeordnet sein. Dabei wird der Abstand zwischen einem virtuellen Schnittpunkt der Seitenwand mit der Siegelfläche und einem virtuellen Schnittpunkt des Innenschenkels der Dichtlippe mit der Siegelfläche gemessen. Eine solche Dimensionierung ist vorteilhaft, wenn die Kapselaufnahme in seinem vorderen Bereich dünnwandig ausgestaltet ist und somit eine schmale Kontaktfläche aufweist oder wenn die Kapselaufnahme eine umlaufende Nut aufweist. Entsprechend kann ein Bereich der Kapselaufnahme zwischen der Dichtlippe und der Seitenwand aufgenommen werden, wodurch sich wiederum zwei umlaufende Kontaktlinien zur verbesserten Abdichtung bilden.

Die Dichtlippe kann an ihrem höchsten Punkt rund ausgestaltet sein und insbesondere einen Krümmungsradius zwischen 0.15 mm und 0.45 mm, bevorzugt zwischen 0.20 mm und 0.40 mm, besonders bevorzugt zwischen 0.25 mm und 0.35 mm, aufweisen. Eine runde Ausgestaltung der Dichtlippe stabilisiert die Konstruktion und erhöht den Widerstand gegen eine Deformation. Der Radius wird dabei aussen an der Dichtlippe am höchsten Punkt gemessen. Ausserdem verhindert eine runde Ausgestaltung einen übermässigen Verschleiss der Kapselaufnahme beim Zusammentreffen mit der Dichtlippe. Vorzugsweise erstreckt sich die Rundung vom höchsten Punkt der Dichtlippe bis in den Bereich der Schenkel.

Im Übergang der Dichtlippe zur Basis des flanschförmigen Randes kann eine Rundung mit Radius zwischen 0.1 mm und 0.5 mm, bevorzugt zwischen 0.1 mm und 0.4 mm, besonders bevorzugt zwischen 0.1 mm und 0.3 mm, vorgesehen sein. Vorzugsweise ist der der Seitenwand zugewandte Radius zwischen Innenschenkel und Basis grösser ausgestaltet als der gegenüberliegende Radius zwischen Aussenschenkel uns Basis. Die Rundung oder der Krümmungsradius wird dabei auf der der Dichtlippe zugewandten Seite, also der Siegelfläche abgewandten Seite, gemessen. Eine Ausgestaltung mit runden Übergängen vereinfacht die Herstellung der Kapsel und hat auch einen positiven Einfluss auf die Stabilität der Dichtlippe.

Vorzugsweise weist der flanschförmige Rand keine weiteren Dichtungskonturen auf. Insbesondere weist der flanschförmige Rand genau eine Dichtlippe auf. Durch die Ausgestaltung von lediglich einer Dichtlippe wird die Herstellung vereinfacht, die Kapsel kann kostengünstig hergestellt werden.

Die Dichtlippe kann aus einem Metall, insbesondere aus Aluminium oder einer Aluminiumlegierung, oder einem Laminat mit wenigstens einer Schicht aus einem Metall, insbesondere aus Aluminium oder einer Aluminiumlegierung, geformt sein. Das Metall kann ausgewählt sein aus der Gruppe umfassend Weissblech, Chromstahl, Titan, Aluminium, Zinn, Kuper, Messing, oder einer Legierung davon. Ebenso ist ein Laminat umfassend mehrere Metallschichten oder einer Kombination von Kunststoff- und Metallschichten denkbar. Je nach Anwendung oder Erfordernissen des Lebensmittels kann die Kapsel mit unterschiedlichen Materialien hergestellt oder entsprechend beschichtet werden. Beschichtungen können beispielsweise durch Bedampfen, Emaillieren oder Eloxieren aufgebracht werden. Es kann jeweils die kostengünstigste Variante gewählt werden.

Das Material kann im Bereich der Dichtlippe eine Materialstärke von 0.1 mm ± 0.05 mm, bevorzugt ± 0.03 mm, besonders bevorzugt ± 0.01 mm aufweisen. Je nach gewähltem Material kann die Materialstärke variieren, um die erforderliche Dichtwirkung gewährleisten zu können. Eine dünne Materialstärke reduziert die Materialkosten der Kapsel.

Die Seitenwand des Kapselkörpers kann einen Durchmesser von 30.1 mm ± 0.2 mm, bevorzugt ± 0.1 mm, besonders bevorzugt ± 0.05 mm, aufweisen. Dabei wird der Durchmesser an einem virtuellen Schnittpunkt der Seitenwand mit der Siegelfläche gemessen. Der Durchmesser ist vorzugsweise an den Innendurchmesser der Kapselaufnahme der Maschine angepasst. Es hat sich aber gezeigt, dass mit dem gewählten Durchmesser eine optimale Passform erreicht werden kann, welche sich in herkömmlichen Maschinen weder durch einen zu engen Sitz verklemmt noch durch ein zu grosses Spiel verkeilt. Ausserdem wird bereits eine Initialdichtung zwischen Seitenwand und Innendurchmesser der Kapselaufnahme ermöglicht und eine optimale Zentrierung der Kapsel gewährleistet.

Der Kapselkörper kann eine Höhe vom Boden bis zur Siegelfläche des flanschförmigen Randes zwischen 27.0 mm und 28.5 mm, bevorzugt zwischen 27.5 mm und 28.0 mm, besonders bevorzugt zwischen 27.8 mm und 27.9 mm, aufweisen. Die Höhe wird dabei auf der Aussenseite der Kapsel gemessen. Die vorgeschlagene Höhe ist relevant, um bei herkömmlichen Maschinen ein korrektes Aufstechen des Kapselbodens zu gewährleisten. Wenn die Kapsel nicht die erforderliche Höhe aufweist, kann eine ungenügende Perforation erfolgen, so dass kein oder zu wenig Extraktionsfluid in die Kapsel eingeführt werden kann. Wenn die Kapsel zu hoch ist, kann ein korrektes Verschliessen der Brühkammer behindert werden, so dass im schlimmsten Fall eine Fehlfunktion der Maschine resultiert.

Der Kapselkörper kann im Wesentlichen die Form eines doppelten Kegelstumpfes aufweisen mit einem ersten Kegelwinkel von 60° ± 5°, bevorzugt ± 2°, besonders bevorzugt ± 1°. Als erster Kegelwinkel wird der Kegelwinkel im Bereich anschliessend an den Boden der Kapsel bezeichnet. Ein zweiter Kegelwinkel kann 6° ± 5°, bevorzugt ± 3°, besonders bevorzugt ± 2° betragen. Als zweiter Kegelwinkel wird der Kegelwinkel im Bereich der Seitenwand betrachtet. Der erste Kegelwinkel ermöglicht beim Verschliessen der Brühkammer noch vor dem effektiven Verschliessen und vor dem Kontakt der Kontaktfläche der Kapselaufnahme mit dem flanschförmigen Rand der Kapsel ein erstes Zentrieren der Kapsel. Üblicherweise ist die Brühkammer einer Maschine mit drei oder mehreren Aufstechelementen versehen, welche beim Verschliessen der Brühkammer den Bodenbereich der Kapsel aufstechen. Der erste Kegelwinkel gewährleistet nun, dass die Kapsel, welche in der Kapselaufnahme noch nicht fixiert ist, bereits ausgerichtet und zentriert wird, bevor die Aufstechelemente die Kapsel aufstechen. Der zweite Kegelwinkel ist im Wesentlichen an die Innengeometrie der Kapselaufnahme angepasst und gewährleistet ebenfalls eine weitere Zentrierung beim Verschliessen.

Der Kapselkörper kann eine Bodenfläche mit einem Durchmesser von 10 mm ± 1 mm, bevorzugt ± 0.5 mm, besonders bevorzugt ± 0.2 mm, aufweisen. Der Durchmesser wird dabei am Boden im Eckpunkt des ersten Kegelwinkels gemessen. Die Bodenfläche gewährleistet zusammen mit dem ersten Kegelwinkel und der Höhe der Kapsel die korrekte Position der Aufstechelemente in Bezug auf den Kapselkörper.

Die Seitenwand des Kapselkörpers kann im Bereich nahe der Basis eine stufenförmige Aufweitung aufweisen, wobei die Aufweitung in einem Abstand von der Siegelfläche in Richtung der zentralen Achse von 3.0 mm bis 7.0 mm, bevorzugt von 4.0 mm bis 6.0 mm, besonders bevorzugt 4.5 mm bis 5.5 mm, angeordnet ist. Diese Aufweitung kann eine Änderung des Aussendurchmessers zwischen 0.1 mm und 2.0 mm, bevorzugt zwischen 0.3 mm und 1.0 mm, besonders bevorzugt zwischen 0.4 mm und 0.5 mm umfassen. Eine Aufweitung des Kapselkörpers nahe dem flanschförmigen Rand verbessert die Zentrierung der Kapsel in der Kapselaufnahme. Entsprechend kann das korrekte Zusammenwirken der Dichtlippe mit der Kontaktfläche der Kapselaufnahme verbessert werden. Ausserdem wird bereits eine Initialdichtung zwischen Seitenwand und Innenseite der Kapselaufnahme erzeugt.

Eine erfindungsgemässe Kapsel für die Zubereitung eines flüssigen Lebensmittels, insbesondere wie vorgängig beschrieben, umfasst einen Kapselkörper mit einer Seitenwand und einem Boden sowie einen den Kapselkörper abschliessenden Deckel zur Bildung eines Aufnahmeraums zur Aufnahme mindestens einer Substanz. Der Kapselkörper kann rotationssymmetrisch und/oder kegelstumpfförmigen ausgebildet sein. Der Boden kann einstückig mit der Seitenwand ausgebildet sein. Die Kapsel weist einen umlaufenden flanschförmigen Rand mit einer Siegelfläche zum dichten Verbinden des Deckels mit dem Kapselkörper auf. Auf einer der Siegelfläche gegenüberliegenden Basis des flanschförmigen Randes ist eine abstehende Dichtlippe zum dichten Zusammenwirken mit einer Kontaktfläche einer Kapselaufnahme einer Zubereitungsmaschine angeordnet. Die Dichtlippe ist hohl und weist zwei Schenkel auf, welche mit der Siegelfläche des flanschförmigen Randes im Wesentlichen einen rechten Winkel ausbilden. Ein zur Seitenwand des Kapselkörpers gerichteter Schenkel der Dichtlippe weist einen radialen Abstand zu einer zentralen Achse des Kapselkörpers auf, wobei dieser Abstand im Wesentlichen gleich gross ist wie ein Abstand einer äusseren Umfanglinie mit einer Neigung von 45° bezogen auf die Achse, einer nach aussen gerichteten Kontaktfläche einer Kapselaufnahme, zu einer zentralen Achse der Kapselaufnahme. Unter im Wesentlichen gleich gross wird hier verstanden, dass ein Verhältnis Abstand Schenkel Dichtlippe zur zentralen Achse zum Abstand äussere Umfangslinie zur zentralen Achse in einem Bereich von 0.90 bis 1.10, bevorzugt im Bereich 0.95 bis 1.05, besonders bevorzug im Bereich 0.99 bis 1.03 liegt. Der radiale Abstand des zur Seitenwand gerichteten Schenkels der Dichtlippe zur zentralen Achse der Kapsel wird auf halber Höhe zwischen dem höchsten Punkt bzw. der höchsten Kante der Dichtlippe und der Siegelfläche gemessen.

Durch die Ausbildung der Dichtlippe auf dem flanschartigen Rand der Kapsel kann eine einfache und kostengünstige Dichtung erstellt werden. Es sind keine zusätzlichen Elemente nötig.

Die Ausgestaltung der Dichtlippe als hohle Dichtlippe erlaubt beispielsweise eine einstückige Ausgestaltung des flanschförmigen Randes, beispielsweise durch Tiefziehen eines metallischen Materials. Entsprechend kann die Kapsel kostengünstig hergestellt werden.

Die Ausrichtung der Schenkel der Dichtlippe im Wesentlichen in einem rechten Winkel erhöht die Stabilität der Dichtlippe, so dass diese bei Beaufschlagung mit einer Anpresskraft der Kontaktfläche der Kapselaufnahme nicht gestaucht wird oder wegkippt.

Durch die gewählte Positionierung des inneren Schenkels der Dichtlippe in Bezug auf eine äusseren Umfanglinie mit einer Neigung von 45° bezogen auf die Achse, einer nach aussen gerichteten Kontaktfläche einer Kapselaufnahme kann gewährleitet werden, dass eine nach aussen gerichteten Kontaktfläche mit dem nach innen gerichteten Schenkel der Dichtlippe zusammentrifft um einen Dichtwirkung zu entfalten. Insbesondere bei Kapselaufnahmen, welche eine umlaufende Nut in ihrer Kontaktfläche aufweisen, kann somit der nach aussen gerichtete Bereich der Kontaktfläche innerhalb der Nut mit dem nach innen gerichteten Schenkel der Dichtlippe zusammenwirken.

Die Dichtlippe kann in einem radialen Abstand von der Seitenwand des Kapselkörpers angeordnet sein, wobei dieser Abstand in Bezug auf einen Abstand zwischen der äusseren Umfanglinie und einer inneren Umfanglinie, definiert durch eine Neigung von 45° einer nach innen gerichteten Kontaktfläche einer Kapselaufnahme, wenigstens gleich gross ist, insbesondere um wenigstens einen Faktor 1.05, bevorzugt um wenigstens einen Faktor 1.10 grösser ist. Dabei wird der Abstand zwischen einem virtuellen Schnittpunkt der Seitenwand mit der Siegelfläche und einem virtuellen Schnittpunkt des Innenschenkels der Dichtlippe mit der Siegelfläche gemessen. Eine solche Dimensionierung ist vorteilhaft, wenn die Kapselaufnahme in ihrem vordersten Bereich dünnwandig ausgestaltet ist und somit eine schmale Kontaktfläche aufweist oder wenn die Kapselaufnahme eine umlaufende Nut aufweist. Entsprechend kann ein Bereich der Kapselaufnahme zwischen der Dichtlippe und der Seitenwand aufgenommen werden, wodurch sich zwei umlaufende Kontaktlinien zur verbesserten Abdichtung bilden.

Die Seitenwand des Kapselkörpers kann einen Durchmesser aufweisen, welcher zum Durchmesser einer Kapselaufnahme maximal 1.5% kleiner, bevorzugt maximal 1.0% kleiner, besonders bevorzugt maximal 0.5% kleiner ist. Dabei wird der Durchmesser des Kapselkörpers an einem virtuellen Schnittpunkt der Seitenwand mit der Siegelfläche bestimmt. Der Durchmesser der Kapselaufnahme wird an einem virtuellen Schnittpunkt ihrer Innenfläche mit einer durch die Öffnung der Kapselaufnahme aufgespannten horizontalen Ebene bestimmt. Durch diese Anpassung des Durchmessers der Seitenwand an den Durchmesser der Kapselaufnahme kann eine optimale Passform erreicht werden. Die Kapsel wird nicht durch einen zu engen Sitz verklemmt, kann sich aber auch nicht durch ein zu grosses Spiel in der Kapselaufnahme verkeilen. Ausserdem wird bereits eine Initialdichtung zwischen Seitenwand und Innendurchmesser der Kapselaufnahme ermöglicht und eine optimale Zentrierung der Kapsel gewährleistet.

Ein weiterer Aspekt der vorliegenden Erfindung betrifft ein System umfassend eine Kapsel wie vorgängig beschrieben und eine Kapselaufnahme einer Zubereitungsmaschine, wobei die Dichtlippe mit einer Nut der Kapselaufnahme derart korrespondiert, dass die Dichtlippe in der Nut aufgenommen wird und mit einer Kontaktfläche der Kapselaufnahme eine dichte Verbindung ermöglicht.

Die Dichtlippe und die Nut können derart aufeinander abgestimmt sein, dass beim Einschliessen der Kapsel zwischen der Kapselaufnahme und einer Verschlussplatte der Zubereitungsmaschine die Dichtlippe in der Nut zuerst eine erste Seitenwand der Nut berührt und beim weiteren Verschliessen elastisch ausgelenkt wird, bis sich die Dichtlippe an der der ersten Seitenwand gegenüberliegenden zweiten Seitenwand der Nut abstützt. Durch das beidseitige Berühren oder Abstützen wird eine zusätzliche Dichtkontur geschaffen und die Dichtwirkung verbessert. Ausserdem kann erreicht werden, dass sich die Dichtlippe seitlich nur im elastischen Bereich verformt. Entsprechend kann eine höhere Verschlusskraft angelegt werden, um die Dichtwirkung weiter zu verbessern.

Anhand von Figuren, welche lediglich Ausführungsbeispiele darstellen, wird die Erfindung im Folgenden näher erläutert. Es zeigen:
- Figur 1:: einen Querschnitt durch eine erfindungsgemässe Kapsel,
- Figur 2:: eine vergrösserte Darstellung des Bereiches der Dichtlippe der Kapsel gemäss Figur 1,
- Figur 3:: die vergrösserte Darstellung der Kapsel gemäss Figur 2, wobei zusätzlich ein vorderes Ende einer Kapselaufnahme eingezeichnet ist,
- Figur 4:: die Darstellung gemäss Figur 3, wobei die Kapselaufnahme mit der Kapsel eine dichte Verbindung eingeht, und
- Figur 5:: eine Abbildung eines Kraft-Weg-Diagramms.

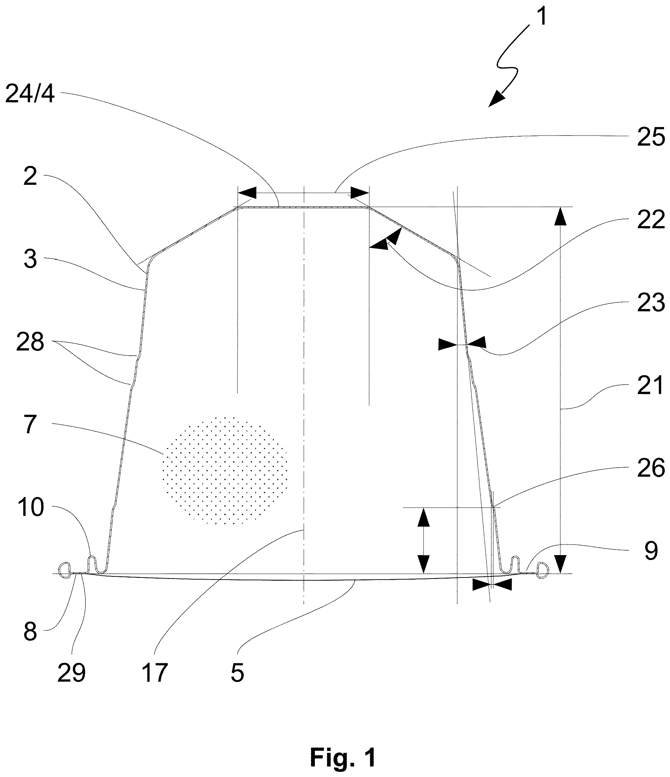

Figur 1 zeigt einen Querschnitt durch eine erfindungsgemässe Kapsel 1. Die Kapsel 1 umfasst einen Kapselkörper 2 mit einer Seitenwand 3 und einem Boden 4. Der Kapselkörper 2 weist einen umlaufenden flanschförmigen Rand 8 mit einer Siegelfläche 29 zum Befestigen eines Deckels 5 auf. Die Kapsel 1 und ist vorzugsweise aroma- und sauerstoffdicht geschlossen, so dass eine Substanz 7 im Innern der Kapsel 1 aufgenommen werden kann und vom Kapselkörper 2 und Deckel 5 eingeschlossen wird. Der Kapselkörper 2 ist rotationssymmetrisch und kegelstumpfförmig ausgestaltet. entsprechend weist der Kapselkörper 2 eine zentrale Achse 17 auf. Der Deckel 5 der Kapsel 1 ist unter dem in der Kapsel 1 herrschenden Innendruck gewölbt.

Der flanschförmige Rand 8 weist auf der der Siegelfläche 29 gegenüberliegenden Seite eine Basis 9 auf, von welcher eine Dichtlippe 10 absteht. Die Dichtlippe 10 ist umlaufend um die Seitenwand 3 ausgestaltet. Der flanschförmige Rand 8 weist an seinem äusseren Ende einen Rollrand auf, ebenso könnte der Rand 8 anders abgeschlossen sein. Der Kapselkörper 2 ist im Wesentlichen in der Form eines doppelten Kegelstumpfes gebildet. Von seinem Boden 4 steht eine Kegelfläche mit einem ersten Kegelwinkel 22 von 60° ab. An diese Kegelfläche fügt sich eine weitere Kegelfläche mit einem zweiten Kegelwinkel 23 von ca. 6° an. Diese zweite Kegelfläche bildet die Seitenwand 3, welche mehrere Stufen 26, 28 aufweist. Bei jeder dieser Stufe ändern sich der Kegelwinkel und der Aussendurchmesser minimal. Die letzte Stufe bildet eine Aufweitung 26 der Seitenwand 3 mit einer Durchmesseränderung von 0.4 mm. Diese Aufweitung ist in einem Abstand in axialer Richtung zwischen 4.7 mm und 5.4 mm von der Siegelfläche 29 angeordnet. Der Boden 4 der Kapsel 1 weist eine Bodenfläche 24 mit einem Durchmesser 25 von 10 mm auf. Die Kapsel 1 weist eine Höhe 21 von 27.85 mm auf. Dabei wird die Höhe 21 zwischen Boden 4 und Siegelfläche 29 gemessen.

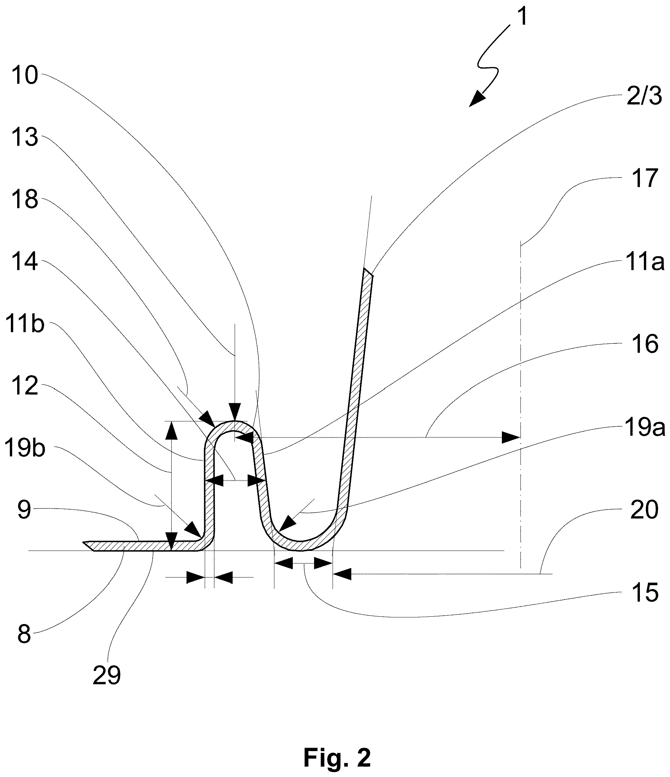

In Figur 2 ist der Bereich der Dichtlippe 10 des Kapselkörpers 2 der Kapsel 1 gemäss Figur 1 vergrössert dargestellt. Ausgehend von der Seitenwand 3 des Kapselkörpers 2 erstreckt sich der flanschförmige Rand 8 nach aussen. Der flanschförmige Rand 8 bildet eine Siegelfläche 29, an welcher der Deckel 5 (siehe Figur 1) befestigt wird. Auf der der Siegelfläche 29 gegenüberliegenden Seite ist die Basis 9 des Randes ersichtlich, aus welcher sich die Dichtlippe 10 erhebt. Die Dichtlippe 10 ist hohl ausgebildet, d.h. auf der Seite der Siegelfläche 29 ist eine entsprechende Vertiefung ausgebildet. Die Dichtlippe 10 weist einen zur Seitenwand 3 gerichteten inneren Schenkel 11a und einen nach aussen gerichteten äusseren Schenkel 11b auf. Die beiden Schenkel 11a, 11b schliessen einen Winkel von 6.67° ein, wobei der äussere Schenkel 11b näherungsweise senkrecht zur Basis 9 oder zur Siegelfläche 29 angeordnet ist.

Die Dichtlippe 10 weist an ihrem höchsten Punkt einen Krümmungsradius 18 von 0.3 mm auf. Der Übergang von der Basis 9 zum äusseren Schenkel 11b weist einen Rundungsradius 19b von 0.1 mm auf, der Übergang von der Basis 9 zum inneren Schenkel 11a einen Rundungsradius 19a von 0.3 mm. Die Radien sind jeweils auf der der Siegelfläche 29 gegenüberliegenden Seite gemessen. Die Dichtlippe 10 weist eine Breite 14 gemessen auf halber Höhe zwischen dem höchsten Punkt der Dichtlippe 10 und der Siegelfläche 29 von 0.65 mm auf. Die Höhe 12 der Dichtlippe 10, gemessen zwischen dem höchsten Punkt der Dichtlippe 10 und der Siegelfläche 29, beträgt 1.35 mm.

Der höchste Punkt bzw. die höchste Kante der Dichtlippe 10 ist in einem Abstand 16 von der zentralen Achse 17 der Kapsel 1 von 16.1 mm angeordnet. Die Dichtlippe 10 weist einen radialen Abstand 15 zur Seitenwand 3 von 0.6 mm auf. Dabei wird der radiale Abstand 15 zwischen der Dichtlippe 10 und der Seitenwand 3 je zwischen den virtuellen Schnittpunkten der Seitenwand 3 mit der Siegelfläche 29 und des inneren Schenkels 11a mit der Siegelfläche 29 gemessen. Die Seitenwand 3 des Kapselkörpers 2 weist einen Durchmesser 20 von 30.1 mm auf. Dabei wird der Durchmesser 20 an einem virtuellen Schnittpunkt der Seitenwand 3 mit der Siegelfläche 29 bestimmt. Der Kapselkörper weist im Bereich der Dichtlippe 10 eine Materialstärke von 0.1 mm auf.

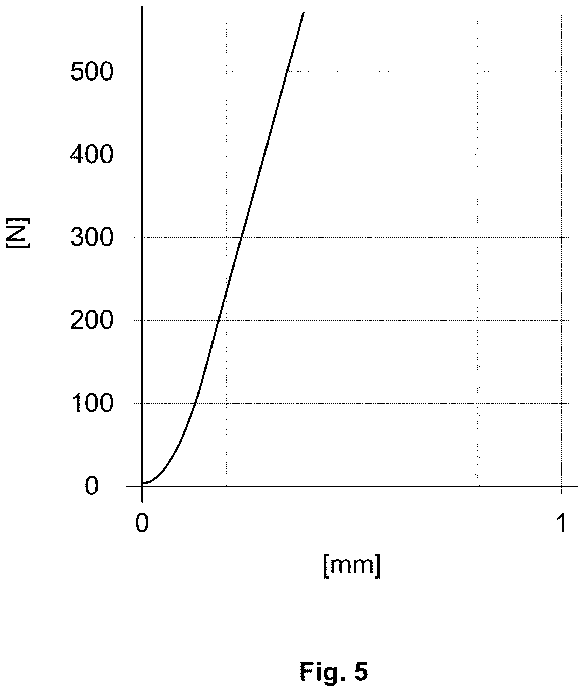

Ebenfalls eingezeichnet ist eine Kraft 13 zur Bestimmung der Belastungsgrenze der Dichtlippe 10, welche am höchsten Punkt der Dichtlippe 10 in Richtung der zentralen Achse 17 angreift. Diese Kraft 13 wird auch zum Aufzeichnen eines Kraft-Weg-Diagramms gemäss Figur 5 verwendet.

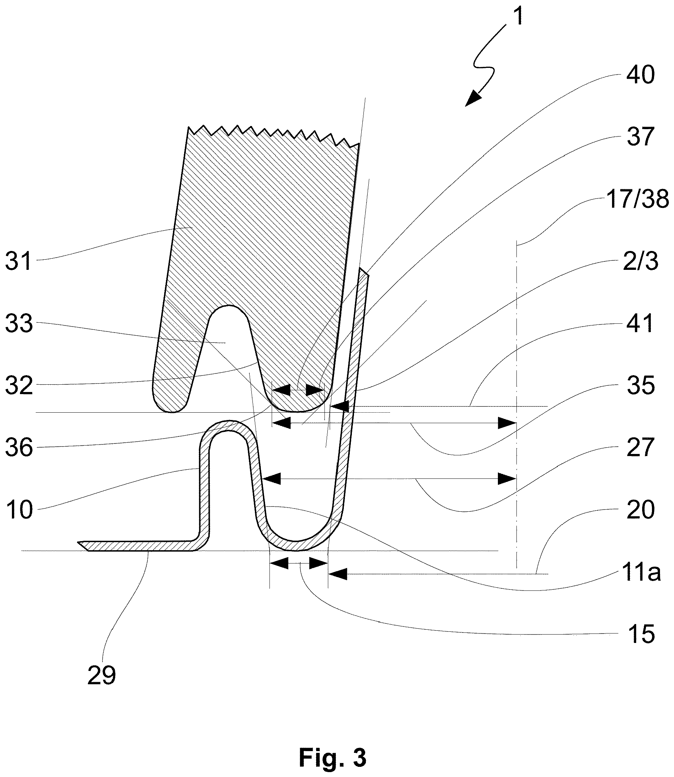

Die Figur 3 zeigt die vergrösserte Darstellung der Kapsel 1 gemäss Figur 2, wobei zusätzlich ein vorderes Ende einer Kapselaufnahme 31 vor dessen Kontakt mit der Kapsel eingezeichnet ist. Idealerweise decken sich die zentrale Achse 17 der Kapsel mit einer zentralen Achse 38 der Kapselaufnahme 31. Die Kapselaufnahme 31 weist an ihrem vorderen, dem flanschförmigen Rand der Kapsel zugewandten Ende eine Nut 33 auf, welche idealerweise mit der Dichtlippe 10 der Kapsel zusammenwirkt.

Damit die Dichtlippe 10 mit der Kontaktfläche 32 der Kapselaufnahme 31 zusammenwirkt, muss ein Abstand 27 des inneren Schenkels 11a zur zentralen Achse 17 der Kapsel 1 im Wesentlichen gleich gross sein wie ein Abstand 35 einer äusseren Umfanglinie 36 mit einer Neigung von 45° bezogen auf die Achse 38, eines nach aussen gerichteten Bereichs der Kontaktfläche 32 der Kapselaufnahme 31, zur zentralen Achse 38 der Kapselaufnahme 31.

Vorzugsweise stehen die beiden Abstände 27 und 35 in einem Verhältnis zwischen 0.9 und 1.1, vorzugsweise zwischen 0.95 und 1.05, besonderes bevorzugt zwischen 0.99 und 1.03. Dabei wird der Abstand 27 des inneren Schenkels 11a zur zentralen Achse 17 der Kapsel 1 auf halber Höhe zwischen dem höchsten Punkt bzw. der höchsten Kante der Dichtlippe 10 und der Siegelfläche 29 gemessen.

Weiter ist es vorteilhaft, wenn der radiale Abstand 15 der Dichtlippe 10 von der Seitenwand 3 des Kapselkörpers 2 wenigstens gleich gross ist ein Abstand 40 zwischen der äusseren Umfanglinie 36 und einer inneren Umfanglinie 37, definiert durch eine Neigung von 45° eines nach innen gerichteten Bereichs der Kontaktfläche 32 der Kapselaufnahme 31.

Der Durchmesser 20 der Seitenwand 3 des Kapselkörpers 2 ist um den Faktor 0.8% kleiner als ein Durchmesser 41 der Kapselaufnahme 31. Dabei wird der Durchmesser 41 der Kapselaufnahme 31 gemessen an einem virtuellen Schnittpunkt ihrer Innenfläche mit einer durch die Öffnung der Kapselaufnahme aufgespannten horizontalen Ebene.

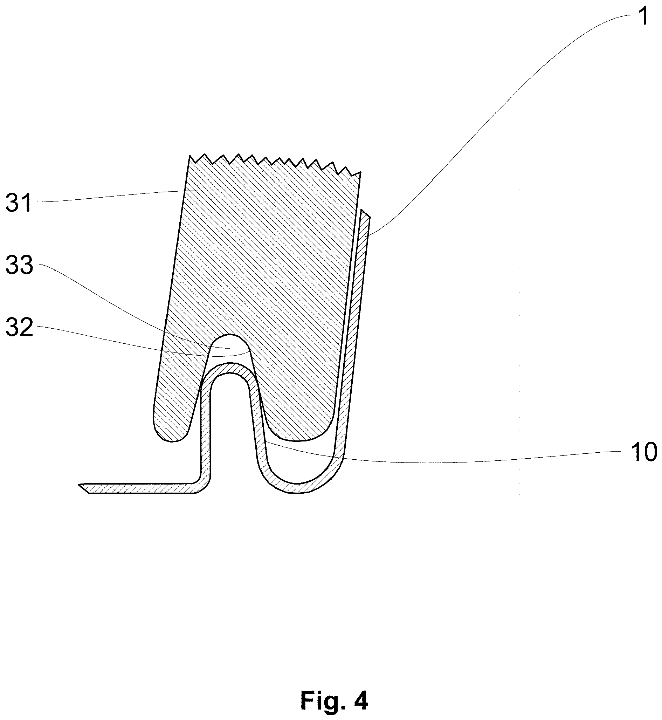

In der Figur 4 wird die Darstellung gemäss Figur 3 gezeigt, wobei die Kapselaufnahme 31 bereits mit der Kapsel 1 eine dichte Verbindung eingeht. Die Dichtlippe 10 ist in der Nut 33 der Kapselaufnahme 31 aufgenommen und berührt die Kontaktfläche 32 der Kapselaufnahme 31 an zwei umlaufenden Linien. Beim Verschliessen der Brühkammer wird die Dichtlippe 10 die Kontaktfläche 32 in einem ersten Punkt berühren. Durch ein Erhöhen eines Anpressdruckes der Kapselaufnahme 31 beim Verschliessen der Brühkammer kann die Dichtlippe 10 seitlich nur so weit nachgeben, bis diese beidseitig in der Nut 33 aufgenommen ist und entsprechend ansteht. Es kann seitlich nur einen elastische Verformung erfolgen. Eine höhere Anpresskraft resultiert in einer verbesserten Dichtwirkung.

Figur 5 zeigt ein Kraft-Weg-Diagramm einer Kraft 13 (siehe Figur 2), welche in Achsrichtung auf die höchste Kante der Dichtlippe einwirkt. Dabei weist das Werkzeug zum Messen der Kraft eine ebene Fläche auf, welche senkrecht zur Achsrichtung der Kapsel verläuft. Deutlich zu erkennen ist ein linearer Bereich des Anstiegs des Kraft-Weg-Diagramms in einem Bereich ab 100 N bis über 500 N. Dieser lineare Bereich lässt sich nur durch eine elastische Verformung der Dichtlippe erklären. Dass es sich um eine elastische Verformung handelt, kann durch eine Wiederholung der Messung an der gleichen Kapsel verifiziert werden. Sofern sich das Kraft-Weg-Diagramm der zweiten Messung mit demjenigen der ersten Messung deckt, handelt es sich um eine elastische Verformung.

## Patentansprüche

1. Kapsel (1) für die Zubereitung eines flüssigen Lebensmittels umfassend einen, vorzugsweise rotationssymmetrisch ausgebildeten und/oder kegelstumpfförmigen, Kapselkörper (2) mit einer Seitenwand (3) und mit einem insbesondere einstückig mit dieser ausgebildeten Boden (4), sowie einen den Kapselkörper (2) abschliessenden Deckel (5) zur Bildung eines Aufnahmeraums zur Aufnahme mindestens einer Substanz (7) zur Zubereitung des flüssigen Lebensmittels,
wobei der Kapselkörper (2) einen umlaufenden flanschförmigen Rand (8) aufweist mit einer Siegelfläche (29) zum dichten Verbinden des Deckels (5) mit dem Kapselkörper (2), wobei auf einer der Siegelfläche (29) gegenüberliegenden Basis (9) des umlaufenden Randes (8) eine umlaufende abstehenden Dichtlippe (10) zum dichten Zusammenwirken mit einer Kontaktfläche (32) einer Kapselaufnahme (31) einer Zubereitungsmaschine angeordnet ist,
wobei die Dichtlippe (10) hohl ist und zwei Schenkel (11a, 11b) aufweist, welche mit der Siegelfläche (29) des flanschförmigen Randes (8) im Wesentlichen einen rechten Winkel ausbilden,
wobei die Dichtlippe (10) wenigstens eine Höhe (12) von 1.0 mm gemessen ab der Siegelfläche (29) des flanschförmigen Randes (8), insbesondere eine Höhe zwischen 1.1 mm und 1.8 mm, bevorzugt zwischen 1.2 mm und 1.6 mm, besonders bevorzugt zwischen 1.3 mm und 1.4 mm, aufweist,
- wobei die Dichtlippe (10) derart geformt und dimensioniert ist, dass diese wenigstens eine Kraft (13) von 500 N, bevorzugt wenigstens 650 N, besonders bevorzugt wenigstens 800 N, im Wesentlichen ohne eine plastische Verformung aufnehmen kann, und/oder
- wobei die Dichtlippe (10) eine Breite (14) zwischen 0.4 mm und 0.9 mm, bevorzugt zwischen 0.5 mm und 0.8 mm, besonders bevorzugt zwischen 0.6 mm und 0.7 mm, aufweist, und/oder
- wobei die Dichtlippe (10) in einem radialen Abstand (16) zwischen 15.8 mm und 16.3 mm, bevorzugt zwischen 15.9 mm und 16.2 mm, besonders bevorzugt zwischen 16.00 mm und 16.15 mm, von einer zentralen Achse (17) des Kapselkörpers (2) angeordnet ist.

2. Kapsel (1) nach Anspruch 1, wobei der Kapselkörper (2), der flanschförmige Rand (8) und die Dichtlippe (10) einstückig ausgestaltet sind.

3. Kapsel (1) nach einem der vorhergehenden Ansprüche, wobei die Dichtlippe (10) in einem radialen Abstand (15) zwischen 0.4 mm und 0.9 mm, bevorzugt zwischen 0.5 mm und 0.75 mm, besonders bevorzugt zwischen 0.55 mm und 0.65 mm, von der Seitenwand (3) des Kapselkörpers (2) angeordnet ist.

4. Kapsel (1) nach einem der vorhergehenden Ansprüche, wobei die Dichtlippe (10) an ihrem höchsten Punkt rund ausgestaltet ist und insbesondere einen Krümmungsradius (18) zwischen 0.15 mm und 0.45 mm, bevorzugt zwischen 0.20 mm und 0.40 mm, besonders bevorzugt zwischen 0.25 mm und 0.35 mm, aufweist.

5. Kapsel (1) nach einem der vorhergehenden Ansprüche, wobei im Übergang der Dichtlippe (10) zur Basis (9) des flanschförmigen Randes (8) eine Rundung mit Radius (19a, 19b) zwischen 0.1 mm und 0.5 mm, bevorzugt zwischen 0.1 mm und 0.4 mm, besonders bevorzugt zwischen 0.1 mm und 0.3 mm, vorgesehen ist, wobei der der Seitenwand (3) zugewandte Radius (19a) vorzugsweise grösser als der gegenüberliegende Radius (19b) ausgestaltet ist.

6. Kapsel (1) nach einem der vorhergehenden Ansprüche, wobei der flanschförmige Rand (8) keine weiteren Dichtungskonturen aufweist und insbesondere genau eine Dichtlippe (10) aufweist.

7. Kapsel (1) nach einem der vorhergehenden Ansprüche, wobei die Dichtlippe (10) aus einem Metall, insbesondere Aluminium oder eine Aluminiumlegierung, oder einem Laminat mit wenigstens einer Schicht aus einem Metall, insbesondere Aluminium oder eine Aluminiumlegierung, geformt ist.

8. Kapsel (1) nach einem der vorhergehenden Ansprüche, wobei das Material im Bereich der Dichtlippe (10) eine Materialstärke von 0.1 mm ± 0.05 mm, bevorzugt ± 0.03 mm, besonders bevorzugt ± 0.01 mm aufweist.

9. Kapsel (1) nach einem der vorhergehenden Ansprüche, wobei die Seitenwand (3) des Kapselkörpers (2) einen Durchmesser (20) von 30.1 mm ± 0.2 mm, bevorzugt ± 0.1 mm, besonders bevorzugt ± 0.05 mm, aufweist.

10. Kapsel (1) nach einem der vorhergehenden Ansprüche, wobei der Kapselkörper (2) eine Höhe (21) vom Boden (4) bis zur Siegelfläche (29) des flanschförmigen Randes (8) zwischen 27.0 mm und 28.5 mm, bevorzugt zwischen 27.5 mm und 28.0 mm, besonders bevorzugt zwischen 27.8 mm und 27.9 mm, aufweist.

11. Kapsel (1) nach einem der vorhergehenden Ansprüche, wobei der Kapselkörper (2) im Wesentlichen die Form eines doppelten Kegelstumpfes aufweist mit einem ersten Kegelwinkel (22) von 60° ± 5°, bevorzugt ± 2°, besonders bevorzugt ± 1°, und insbesondere einem zweiten Kegelwinkel (23) von 6° ± 5°, bevorzugt ± 3°, besonders bevorzugt ± 2°.

12. Kapsel (1) nach einem der vorhergehenden Ansprüche, wobei der Kapselkörper (2) eine Bodenfläche (24) mit einem Durchmesser (25) von 10 mm ± 1 mm, bevorzugt ± 0.5 mm, besonders bevorzugt ± 0.2 mm, aufweist.

13. Kapsel (1) nach einem der vorhergehenden Ansprüche, wobei die Seitenwand (3) des Kapselkörpers (2) im Bereich nahe der Basis (9) eine stufenförmige Aufweitung (26) aufweist,
wobei die Aufweitung (26) in einem Abstand von der Siegelfläche (29) in Richtung der zentralen Achse (17) von 3.0 mm bis 7.0 mm, bevorzugt von 4.0 mm bis 6.0 mm, besonders bevorzugt 4.5 mm bis 5.5 mm, angeordnet ist und insbesondere eine Änderung des Aussendurchmessers zwischen 0.1 mm und 2.0 mm, bevorzugt zwischen 0.3 mm und 1.0 mm, besonders bevorzugt zwischen 0.4 mm und 0.5 mm umfasst.

14. Kapsel (1) für die Zubereitung eines flüssigen Lebensmittels umfassend einen, vorzugsweise rotationssymmetrisch ausgebildeten und/oder kegelstumpfförmigen, Kapselkörper (2) mit einer Seitenwand (3) und mit einem insbesondere einstückig mit dieser ausgebildeten Boden (4), sowie einen den Kapselkörper (2) abschliessenden Deckel (5) zur Bildung eines Aufnahmeraums zur Aufnahme mindestens einer Substanz (7) zur Zubereitung des flüssigen Lebensmittels,
wobei die Kapsel (1) einen umlaufenden flanschförmigen Rand (8) mit einer Siegelfläche (29) zum dichten Verbinden des Deckels (5) mit dem Kapselkörper (2) aufweist,
wobei auf einer der Siegelfläche (29) gegenüberliegenden Basis (9) des flanschförmigen Randes (8) eine abstehende Dichtlippe (10) zum dichten Zusammenwirken mit einer Kontaktfläche (32) einer Kapselaufnahme (31) einer Zubereitungsmaschine (30) angeordnet ist,
wobei die Dichtlippe (10) hohl ist und zwei Schenkel (11a, 11b) aufweist, welche mit der Siegelfläche (29) des flanschförmigen Randes (8) im Wesentlichen einen rechten Winkel ausbilden,
wobei ein zur Seitenwand (3) des Kapselkörpers (2) gerichteter Schenkel (11a) der Dichtlippe (10) einen radialen Abstand (27) zu einer zentralen Achse (17) des Kapselkörpers (2) aufweist, wobei dieser Abstand (27) im Wesentlichen gleich gross ist wie ein Abstand (35) einer äusseren Umfanglinie (36) mit einer Neigung von 45° bezogen auf die Achse (17), einer nach aussen gerichteten Kontaktfläche (32) einer Kapselaufnahme (31), zu einer zentralen Achse (38) der Kapselaufnahme (31).

15. Kapsel (1) nach Anspruch 14, wobei die Dichtlippe (10) in einem radialen Abstand (15) von der Seitenwand (3) des Kapselkörpers (2) angeordnet ist, wobei dieser Abstand (15) in Bezug auf einen Abstand (40) zwischen der äusseren Umfanglinie (36) und einer inneren Umfanglinie (37), definiert durch eine Neigung von 45° einer nach innen gerichteten Kontaktfläche (32) einer Kapselaufnahme (31), wenigstens gleich gross ist, insbesondere um wenigstens einen Faktor 1.05, bevorzugt um wenigstens einen Faktor 1.10 grösser ist.

16. Kapsel (1) nach Anspruch 14 oder 15, wobei die Seitenwand (3) des Kapselkörpers (2) einen Durchmesser (20) aufweist, welcher zum Durchmesser (41) einer Kapselaufnahme (31) maximal 1.5% kleiner, bevorzugt maximal 1.0% kleiner, besonders bevorzugt maximal 0.5% kleiner ist.

17. System umfassend eine Kapsel (1) nach einem der vorhergehenden Ansprüche und eine Kapselaufnahme (31) einer Zubereitungsmaschine (30), wobei die Dichtlippe (10) mit einer Nut (33) der Kapselaufnahme (31) derart korrespondiert, dass die Dichtlippe (10) in der Nut (33) aufgenommen wird und mit einer Kontaktfläche (32) der Kapselaufnahme (31) eine dichte Verbindung ermöglicht.

18. System nach Anspruch 17, wobei die Dichtlippe (10) und die Nut (33) derart aufeinander abgestimmt sind, dass beim Einschliessen der Kapsel (1) zwischen der Kapselaufnahme (31) und einer Verschlussplatte der Zubereitungsmaschine (30) die Dichtlippe (10) in der Nut (33) zuerst eine erste Seitenwand der Nut (33) berührt und beim weiteren Verschliessen elastisch ausgelenkt wird bis sich die Dichtlippe (10) an der der ersten Seitenwand gegenüberliegenden zweiten Seitenwand der Nut (33) abstützt.
